# EUROPÄISCHE PATENTSCHRIFT

(11) **EP 1 062 652 B1**
(45) Veröffentlichungstag und Bekanntmachung des Hinweises auf die Patenterteilung: **14.08.2002**
(21) Anmeldenummer: 99916781.0
(22) Anmeldetag: 11.03.1999
(51) Int. Cl.: G09G 3/36

(54) **AKTIVMATRIX-FLÜSSIGKRISTALLANZEIGE**
LIQUID CRYSTAL DISPLAY WITH ACTIVE MATRIX
AFFICHEUR A CRISTAUX LIQUIDES A MATRICE ACTIVE

(30) Priorität: 13.03.1998 DE 19811022
(43) Veröffentlichungstag der Anmeldung: 27.12.2000
(73) Patentinhaber: SIEMENS AKTIENGESELLSCHAFT, 80333 München (DE)
(72) Erfinder: MÄRZ, Michael, D-67808 Steinbach (DE); WAMMES, Klaus, D-67577 Alsheim (DE)
(86) Internationale Anmeldenummer: DE9900680
(87) Internationale Veröffentlichungsnummer: WO9948080

(56) Entgegenhaltungen:
- EP-A- 0 293 048
- US-A- 4 846 557
- US-A- 5 717 474

## Beschreibung

Aus der US-A-4 635 127 ist eine Aktivmatrix-Flüssigkristallanzeige bekannt, die wegen der üblicherweise als Dünnfilmtransistoren ausgebildeten steuerbaren Schalter auch als TFT-LCD (Thin Film Transistor Liquid Crystal Display) bezeichnet wird.

Die bekannte Aktivmatrix-Flüssigkristallanzeige weist in Zeilen und Spalten einer Matrix angeordnete Bildpunkte auf, die von auf einem gemeinsamen Träger ausgebildeten Bildpunktelektroden, einer allen Bildpunktelektroden gemeinsamen und ihnen gegenüberliegenden Bezugselektrode sowie einer zwischen den Bildpunktelektroden und der Bezugselektrode liegenden Flüssigkristallschicht gebildet werden. Die Bildpunktelektroden sind über ihnen einzeln zugeordnete steuerbare Schalter spaltenweise mit Spaltenelektroden verbunden, die an einer unterschiedliche Grauwertsignale für die unterschiedlichen Spalten erzeugenden Spalten-Steuereinrichtung angeschlossen sind. Die steuerbaren Schalter sind steuerseitig zeilenweise mit Zeilenelektroden verbunden, die an einer nacheinander Einschaltsignale für die Schalter in den unterschiedlichen Zeilen erzeugenden Zeilen-Steuereinrichtung angeschlossen sind. Die Begriffe Zeilen und Spalten sind hier wie auch im folgenden gegeneinander austauschbar.

Zur Darstellung von Bildern mit unterschiedlichen Grauwerten werden gleichzeitig an allen Spaltenelektroden Grauwertsignale angelegt, die die Grauwerte der Bildpunkte jeweils einer Zeile repräsentieren; mittels eines Einschaltsignals an einer der Zeilenelektroden werden die Grauwertsignale an die Bildpunktelektroden der betreffenden Zeile durchgeschaltet. Auf diese Weise werden in schneller Folge nacheinander alle Zeilen mit Bildpunkten aktiviert. Dabei stellt sich die optische Transparenz der Flüssigkristallzellen, also der Flüssigkristallschicht in den Bereichen der einzelnen Bildpunkte, in Abhängigkeit von der Spannung zwischen der jeweiligen Bildpunktelektrode und der Bezugselektrode ein, so daß bei Hintergrundbeleuchtung der Aktivmatrix-Flüssigkristallanzeige das gewünschte Bild dargestellt wird. Zur Vermeidung von Grauwertverfälschungen bei der Bildwiedergabe werden die Flüssigkristallzellen in einem Spannungsbereich betrieben, in dem die ansonsten typischerweise nichtlineare Abhängigkeit zwischen der Transparenz der Flüssigkristallzellen und der an ihnen liegenden Spannung annähernd linear ist.

Zur Darstellung von Farbbildern sind den Flüssigkristallzellen spaltenweise abwechselnd rote, grüne und blaue Farbfilterstreifen vor- oder nachgeordnet, wobei die jeweils dahinter bzw. davor in einer Zeile liegenden drei benachbarten Flüssigkristallzellen bezüglich ihrer Ansteuerung zu einem aus drei Unterbildpunkten bestehenden Farbbildpunkt zusammengefaßt sind. Bei der Farbbildwiedergabe können sich Unlinearitäten zwischen der Transparenz der Flüssigkristallzellen und der an ihnen liegenden Spannung besonders störend bemerkbar machen.

Die sich in Abhängigkeit von der anliegenden Spannung einstellende Transparenz jeder einzelnen Flüssigkristallzelle ist bedingt durch die spannungsabhängige optische Verdrehung der Flüssigkristalle blickwinkelabhängig, so daß bei einer bestimmten Spannung an der Flüssigkristallzelle der dargestellte Bildpunkt je nach Blickwinkel des Betrachters unterschiedlich hell ist.

Es ist bekannt, diesen Effekt bei Flüssigkristallanzeigen zu nutzen, die nur zur Hell-/Dunkel- bzw. Schwarz-/Weiß-Darstellung, nicht aber zur Darstellung unterschiedlicher Helligkeits- bzw. Grauwerte ausgebildet sind. Ein Beispiel hierfür ist die Einstellung von optimalen Kontrastverhältnissen für einen bestimmten Blickwinkel. Ein weiteres, aus der

US-A-5 526 065 bekanntes Beispiel ist die Verwendung einer solchen Flüssigkristallanzeige als optisches Filter vor einem konventionellen Bildschirm in einem Fahrzeug, um das dargestellte Bild während der Fahrt für den Blickwinkelbereich des Fahrzeugführers unsichtbar, für den des Beifahrers dagegen sichtbar zu machen.

Der Erfindung liegt die Aufgabe zugrunde, die Möglichkeiten der Bilddarstellung mittels einer Aktivmatrix-Flüssigkristallanzeige ohne Erhöhung der Anzahl der anzusteuernden Zeilen und Spalten zu verbessern bzw. zu erweitern.

Gemäß der Erfindung wird die Aufgabe durch die in Anspruch 1 angegebene Aktivmatrix-Flüssigkristallanzeige gelöst.

Die Merkmale des Oberbegriffs von Anspruch 1 sind in Kombination aus US 4 846 557 bekannt.

Vorteilhafte Aus- und Weiterbildungen der erfindungsgemäßen Aktivmatrix-Flüssigkristallanzeige sind in den Unteransprüchen angegeben.

Bei der erfindungsgemäßen Aktivmatrix-Flüssigkristallanzeige ist also jeder Bildpunkt in mindestens zwei Unterbildpunkte aufgeteilt. Um alle Unterbildpunkte des jeweiligen Bildpunktes unabhängig voneinander über lediglich eine Zeilenelektrode und eine Spaltenelektrode ansteuern zu können, wird auf die Zeilenelektrode ein Steuersignal gegeben, das an der Stelle des Bildpunktes mittels der dortigen Bildpunkt-Steuereinrichtung in örtlich und zeitlich verschiedene Einschaltsignale für die den Unterbildpunkten zugeordneten steuerbaren Schalter umgesetzt wird. Während der unterschiedlichen Einschaltzeiten, in denen die steuerbaren Schalter eingeschaltet sind, werden an der Spaltenelektrode unterschiedliche Grauwertsignalpegel angelegt, so daß die von den Bereichen der Flüssigkristallschicht zwischen den Unterbildpunkt-Elektroden und der Bezugselektrode gebildeten Flüssigkristall-Unterzellen auf unterschiedliche Spannungen aufgeladen werden, die sie bis zur nächsten Ansteuerung beibehalten. Die Ansteuerung der Unterbildpunkte erfolgt also im Vergleich zu der Ansteuerung der Zeilen mit Bildpunkten quasiparallel und somit ohne nennenswerte Zeitverzögerung. Die optische Transparenz jeder der Flüssigkristall-Unterzellen stellt sich in Abhängigkeit von der an ihr anliegenden Spannung ein.

Die erfindungsgemäße Aktivmatrix-Flüssigkristallanzeige ermöglicht also die Darstellung von erheblich mehr Bildinformationen, als dies bei bisherigen Aktivmatrix-Flüssigkristallanzeigen mit gleicher Anzahl von Zeilen- und Spaltenelektroden der Fall ist. Da bei der erfindungsgemäßen Aktivmatrix-Flüssigkristallanzeige alle Unterbildpunkte jedes Bildpunktes jeweils nur über eine einzige Zeilenelektrode und eine einzige Spaltenelektrode angesteuert werden, ist umgekehrt bei der erfindungsgemäßen Aktivmatrix-Flüssigkristallanzeige die Anzahl der benötigten Zeilen- und Spaltenelektroden im Vergleich zu herkömmlichen Aktivmatrix-Flüssigkristallanzeigen mit derselben Bildauflösung um einen der Anzahl der Unterbildpunkte je Bildpunkt entsprechenden Faktor geringer, so daß der von den Zeilen- und Spaltenelektroden lichtundurchlässig abgedeckte und somit für die Bilddarstellung nicht zur Verfügung stehende Flächenanteil der erfindungsgemäßen Aktivmatrix-Flüssigkristallanzeige geringer ist und darüber hinaus auch der schaltungstechnische Aufwand bei der Zeilen- und der Spalten-Steuereinrichtung geringer ist.

Die Umsetzung der Steuersignale auf den Zeilenelektroden in örtlich und zeitlich verschiedene Einschaltsignale kann im Rahmen der Erfindung auf unterschiedliche Weise erfolgen.

So besteht jedes Steuersignal aus voneinander getrennten, zeitlich aufeinanderfolgenden Signalimpulsen, die in der Bildpunkt-Steuereinrichtung durch geeignete und für sich bekannte Mittel wie z. B. Schieberegister, Zähler oder Serien-Parallel-Wandler in die örtlich und zeitlich verschiedenen Einschaltsignale umgesetzt werden. Um zu verhindern, daß beispielsweise durch Störimpulse auf der Zeilenelektrode die Reihenfolge der für die Unterbildpunkt-Elektroden erzeugten Einschaltsignale verändert wird, enthält jedes Steuersignal vorzugsweise zusätzlich einen Synchronisierimpuls, der sich von den übrigen Signalimpulsen durch Form, Höhe, Dauer oder Polarität unterscheidet und mit dem die Signalumsetzung bei jeder neuen Ansteuerung der Unterbildpunkte synchronisiert wird.

Wie bereits erwähnt, ermöglicht die erfindungsgemäße Aktivmatrix-Flüssigkristallanzeige die Darstellung von erheblich mehr Bildinformationen, als dies bei bisherigen Aktivmatrix-Flüssigkristallanzeigen mit gleicher Anzahl von Zeilen- und Spaltenelektroden der Fall ist.

So können zur Darstellung von Farbbildern den Unterbildpunkten der einzelnen Bildpunkte unterschiedliche Farbfilter vor- oder nachgeordnet werden. Die Farbeinstellung jedes Bildpunktes erfolgt dabei über die unterschiedlichen Grauwertpegel des Grauwertsignals, mit denen die einzelnen Unterbildpunkte angesteuert werden, wobei für reine Hell-/Dunkel- bzw. Schwarz-/Weiß-Darstellungen die Grauwertpegel für jeden der Unterbildpunkte jeweils gleich sind.

Ein weiterer Vorteil der erfindungsgemäßen Aktivmatrix-Flüssigkristallanzeige besteht in der Möglichkeit, den Blickwinkelbereich einzustellen, innerhalb dessen das jeweils dargestellte Bild unter Einhaltung bestimmter Kontrastverhältnisse sichtbar ist. Wie eingangs erwähnt, ist die sich in Abhängigkeit von der Spannung einstellende optische Transparenz jeder Flüssigkristallzelle bzw. Flüssigkristall-Unterzelle blickwinkelabhängig. Bei der erfindungsgemäßen Aktivmatrix-Flüssigkristallanzeige läßt sich daher durch die unterschiedliche Ansteuerung der Unterbildpunkte die Größe und Lage des Blickwinkelbereichs einstellen, innerhalb dessen der einzelne Bildpunkt mit einer bestimmten Helligkeit erscheint. Hierzu ist vorgesehen, daß die erfindungsgemäße Aktivmatrix-Flüssigkristallanzeige eine Einstellvorrichtung aufweist, mit der sich die zeitlich aufeinanderfolgenden Grauwertpegel für die einzelnen Unterbildpunkte jedes Bildpunktes unter zumindest annähernder Beibehaltung des durchschnittlichen Grauwertpegels aller dieser Unterbildpunkte verändern lassen. Auf diese Weise werden die blickwinkelabhängigen Helligkeiten der einzelnen Unterbildpunkte bei insgesamt unveränderter Gesamthelligkeit des jeweils von ihnen gebildeten Bildpunktes geändert.

Da, wie eingangs bereits erwähnt, die Abhängigkeit zwischen der Transparenz der einzelnen Flüssigkristallzellen bzw. Flüssigkristall-Unterzellen und der an ihnen jeweils anliegenden Spannung typischerweise nichtlinear ist, werden die Flüssigkristall-Unterzellen entweder in einem Spannungsbereich betrieben, in dem diese Abhängigkeit annähernd linear ist, oder die den Flüssigkristall-Unterzellen zugeführten Grauwertsignale werden zuvor in einer Korrektureinrichtung aufgrund von Informationen über die typische Abhängigkeit zwischen der Transparenz von Flüssigkristall-Unterzellen und der an ihnen anliegenden Spannung und in Abhängigkeit von den Grauwertpegeln in der Weise verzerrt, daß sich ein zumindest annähernd linearer Zusammenhang zwischen der Transparenz der Flüssigkristall-Unterzellen und den unverzerrten Grauwertsignalen ergibt. Im letzteren Fall besteht in vorteilhafter Weise die Möglichkeit, durch eine weitgehend unbeschränkte Wahl des Spannungsbereichs, in dem die Flüssigkristall-Unterzellen betrieben werden, optimale Kontrastverhältnisse für bestimmte Blickwinkelbereiche einzustellen, ohne daß es dabei zu Verfälschungen der Bildwiedergabe kommt.

Beim Einsatz der erfindungsgemäßen Aktivmatrix-Flüssigkristallanzeige in einem Fahrzeug ist es also in gleicher Weise, wie dies aus der oben bereits erwähnten US-A-5 526 065 bekannt ist, möglich, das dargestellte Bild in dem Blickwinkelbereich des Fahrzeugführers auszublenden, während es für den Beifahrer sichtbar ist; im Unterschied zum Stand der Technik erfolgt dabei die Bildwiedergabe unmittelbar durch die Aktivmatrix-Flüssigkristallanzeige, die u. a. wegen ihrer geringeren Einbautiefe für den Einsatz in Fahrzeugen weitaus besser geeignet ist als konventionelle Bildschirme. Eine weitere Einsatzmöglichkeit der erfindungsgemäßen Aktivmatrix-Flüssigkristallanzeige besteht in der Darstellung von dreidimensionalen Objekten, wobei für unterschiedliche einstellbare Blickwinkelbereiche unterschiedliche Bilder ein und desselben Objekts in unterschiedlicher Ansicht dargestellt werden.

Um in vorteilhafter Weise gleichzeitig unterschiedliche Bilder für unterschiedliche Blickwinkelbereiche darstellen zu können, ist im Rahmen der Erfindung vorgesehen, daß die Spalten-Steuereinrichtung Mittel zur sequentiellen Anordnung der von mindestens zwei unterschiedlichen Bildsignalquellen gelieferten Grauwertpegel in den von ihr erzeugten Grauwertsignalen aufweist, so daß die Unterbildpunkte jedes Bildpunkts mit den Grauwertpegeln von mindestens zwei unterschiedlichen Bildern angesteuert werden.

Mit der gleichzeitigen Wiedergabe unterschiedlicher Bilder in unterschiedlichen Blickwinkelbereichen ist es beispielsweise möglich, in einem Kraftfahrzeug dem Fahrzeugführer Verkehrsinformationen anzuzeigen und gleichzeitig dem Beifahrer einen Videofilm zu präsentieren. In gleicher Weise können beispielsweise in Eisenbahnwagen oder Flugzeugen nebeneinandersitzenden Passagieren über eine einzige Aktivmatrix-Flüssigkristallanzeige unterschiedliche Bilder (Videos) gezeigt werden.

Wie oben angegeben, kann durch die unterschiedliche Ansteuerung der Unterbildpunkte der einzelnen Bildpunkte der Blickwinkelbereich, innerhalb dessen die Bildpunkte jeweils mit einer bestimmten Helligkeit sichtbar sind, verändert werden; insbesondere kann auf diese Weise das dargestellte Bild in bestimmten Blickwinkelbereichen ausgeblendet werden oder es können in unterschiedlichen Blickwinkelbereichen unterschiedliche Bilder dargestellt werden. Ergänzend oder alternativ hierzu kann im Rahmen der Erfindung vorgesehen werden, daß die Flüssigkristallschicht im Bereich jedes einzelnen Bildpunktes jeweils in den einzelnen Unterbildpunkten zugeordnete Domänen mit unterschiedlicher Ausrichtung der Flüssigkristalle unterteilt ist. Dabei werden beispielsweise für die gleichzeitige Darstellung von zwei verschiedenen Bildern in zwei unterschiedlichen Blickwinkelbereichen diejenigen Unterbildpunkte, bei denen die Flüssigkristalle in einer ersten Richtung liegen, mit den von einer ersten Bildsignalquelle gelieferten Grauwertpegeln und die Unterbildpunkte, bei denen die Flüssigkristalle in einer zweiten Richtung liegen, mit den von einer zweiten Bildsignalquelle gelieferten Grauwertpegeln angesteuert. Entsprechend kann bei der Darstellung eines einzigen Bildes der Blickwinkelbereich, innerhalb dessen das Bild sichtbar ist, dadurch verändert werden, daß mit den Grauwertpegeln entweder die Unterbildpunkte mit den in der ersten Richtung liegenden Flüssigkristallen oder die Unterbildpunkte mit den in der zweiten Richtung liegenden Flüssigkristallen oder alle Unterbildpunkte angesteuert werden. Bei einer geeigneten Anzahl von Unterbildpunkten oder durch individuelle Ansteuerung der Unterbildpunkte ist es somit möglich, gleichzeitig verschiedene Bilder in unterschiedlichen Blickwinkelbereichen darzustellen und die Blickwinkelbereiche zu verändern.

Nicht zuletzt bietet die erfindungsgemäße Aktivmatrix-Flüssigkristallanzeige den Vorteil, daß ein Defekt an einem einzelnen Unterbildpunkt durch Veränderung der Ansteuerung der übrigen Unterbildpunkte kompensiert werden kann, so daß sich die Gesamthelligkeit des aus den betreffenden Unterbildpunkten bestehenden Bildpunktes nicht ändert.

Zur weiteren Erläuterung der Erfindung wird im folgenden auf die Figuren der Zeichnung Bezug genommen; im einzelnen zeigen:
- Figur 1: ein Beispiel für den Aufbau der erfindungsgemäßen Aktivmatrix-Flüssigkristallanzeige,
- Figur 2: ein Ausführungsbeispiel der erfindungsgemäßen Aktivmatrix-Flüssigkristallanzeige in Form eines Blockschaltbildes, die
- Figuren 3 bis 5: unterschiedliche Beispiele für die Ansteuerung der Unterbildpunkte,
- Figur 6: ein Beispiel für die Anordnung der Unterbildpunkt-Elektroden mit den zugehörigen steuerbaren Schaltern und den Bildpunkt-Steuereinrichtungen, die
- Figuren 7 und 8: unterschiedliche Einsatzbeispiele der erfindungsgemäßen Aktivmatrix-Flüssigkristallanzeige,
- Figur 9: ein Beispiel für den Einbau der Aktivmatrix-Flüssigkristallanzeige in einem Fahrzeug,
- Figur 10: ein Beispiel für die Abhängigkeit zwischen der Helligkeit eines Bildpunktes und dem Blickwinkel,
- Figur 11: ein Beispiel für die nichtlineare Abhängigkeit zwischen der Helligkeit des Bildpunktes bzw. der optischen Transparenz der zugehörigen Flüssigkristallzelle und der an ihr anliegenden Spannung und
- Figur 12: ein Beispiel für die Verzerrung der Grauwertsignale.

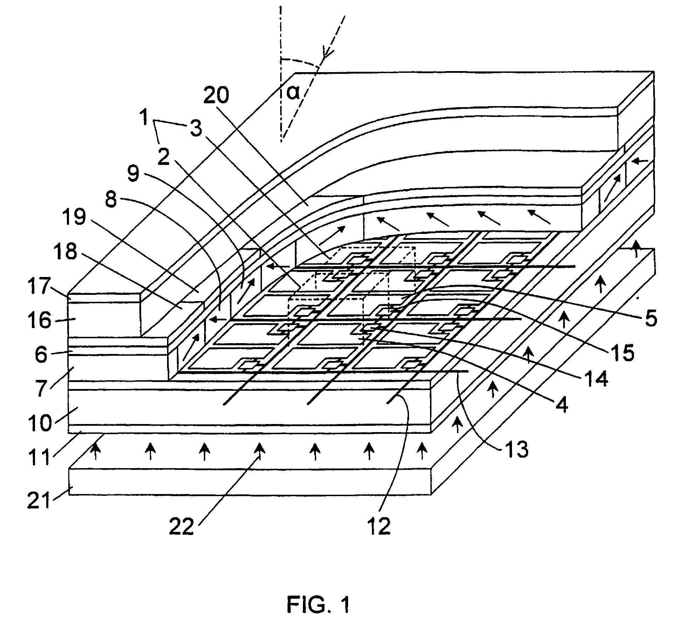

Figur 1 zeigt ein Beispiel für den Aufbau der erfindungsgemäßen Aktivmatrix-Flüssigkristallanzeige ohne die zugehörige Steuerelektronik. Die Aktivmatrix-Flüssigkristallanzeige enthält in Zeilen und Spalten einer Matrix angeordnete Bildpunkte 1, die jeweils aus mindestens zwei Unterbildpunkten 2 und 3 bestehen. Die Unterbildpunkte 2 und 3 werden jeweils von einer lichtdurchlässigen Unterbildpunkt-Elektrode 4 bzw. 5, einer allen oder zumindest einem Teil der Bildpunkte 1 der Aktivmatrix-Flüssigkristallanzeige gemeinsamen lichtdurchlässigen Bezugselektrode 6 und einer zwischen den Unterbildpunkt-Elektroden 4 und 5 und der Bezugselektrode 6 liegenden Flüssigkristallschicht 7 gebildet. Die jeweils zwischen den Unterbildpunkt-Elektroden 4 und 5 und der Bezugselektrode 6 liegenden Bereiche der Flüssigkristallschicht 7 werden im folgenden als Flüssigkristall-Unterzellen bezeichnet. Die Flüssigkristallschicht 7 ist in Domänen 8 und 9 mit unterschiedlicher Ausrichtung der Flüssigkristalle unterteilt, wobei den unterschiedlichen Unterbildpunkten 2 und 3 jedes Bildpunktes 1 unterschiedliche Domänen 8 und 9 zugeordnet sind. Bei dem gezeigten Ausführungsbeispiel sind Domänen 8 und 9 mit zwei unterschiedlichen Ausrichtungen der Flüssigkristalle vorgesehen, wobei jeder der hier waagerecht verlaufenden Spalten von Unterbildpunkten 2 bzw. 3 jeweils eine Domäne 8 bzw. 9 zugeordnet ist.

Die Unterbildpunkt-Elektroden 4 und 5 sind auf der Oberseite einer Glasplatte 10 ausgebildet, die auf ihrer Unterseite einen Polarisationsfilm 11 trägt. Auf der Oberseite der Glasplatte 10 sind ferner Zeilenelektroden 12 und Spaltenelektroden 13 in der Weise ausgebildet, daß jeder Zeile von Bildpunkten 1 jeweils eine der Zeilenelektroden 12 und jeder Spalte von Bildpunkten 1 jeweils eine der Spaltenelektroden 13 zugeordnet ist. Die Unterbildpunkt-Elektroden 4 und 5 jedes einzelnen Bildpunktes 1 sind mit der jeweils zugeordneten Spaltenelektrode 13 über steuerbare Schalter verbunden, die ihrerseits steuerseitig über eine Bildpunkt-Steuereinrichtung an der jeweils zugeordneten Zeilenelektrode 12 angeschlossen sind. Bei dem hier dargestellten Ausführungsbeispiel sind die als Dünnfilmtransistoren ausgebildeten steuerbaren Schalter zusammen mit den sie steuernden Schaltungsteilen der Bildpunkt-Steuereinrichtung mit den Bezugszeichen 14 und 15 versehen.

Die lichtdurchlässige Bezugselektrode 6 ist mit einer oberen Glasplatte 16 abgedeckt, auf der ein weiterer Polarisationsfilm 17 aufgebracht ist. Zur Darstellung von Farbbildern sind hier zwischen der Bezugselektrode 6 und der oberen Glasplatte 11 spaltenweise abwechselnd rote, grüne und blaue Farbfilterstreifen 18, 19 und 20 angeordnet.

Zur Bildwiedergabe wird mittels einer Hintergrundbeleuchtung 21 Licht 22 durch die Flüssigkristallschicht 7 gestrahlt und von den Flüssigkristall-Unterzellen je nach Ansteuerung über die Zeilen- und Spaltenelektroden 12 und 13 mit unterschiedlicher Helligkeit durchgeschaltet. Dabei wird das Licht 22 zunächst von dem unteren Polarisationsfilm 11 (Polarisator) polarisiert. In den einzelnen Flüssigkristall-Unterzellen werden die Flüssigkristalle in Abhängigkeit von der elektrischen Spannung zwischen der jeweiligen Unterbildpunkt-Elektrode 4 bzw. 5 und der Bezugselektrode 6 optisch verdreht, so daß das durch die Flüssigkristalle hindurchtretende polarisierte Licht in seiner Polarisationsrichtung entsprechend gedreht wird. Diese Verdrehung der Polarisationsrichtung führt in dem oberen Polarisationsfilm 17 (Analysator) zu einer je nach dem Grad der Drehung mehr oder weniger starken Helligkeitsminderung des austretenden Lichts.

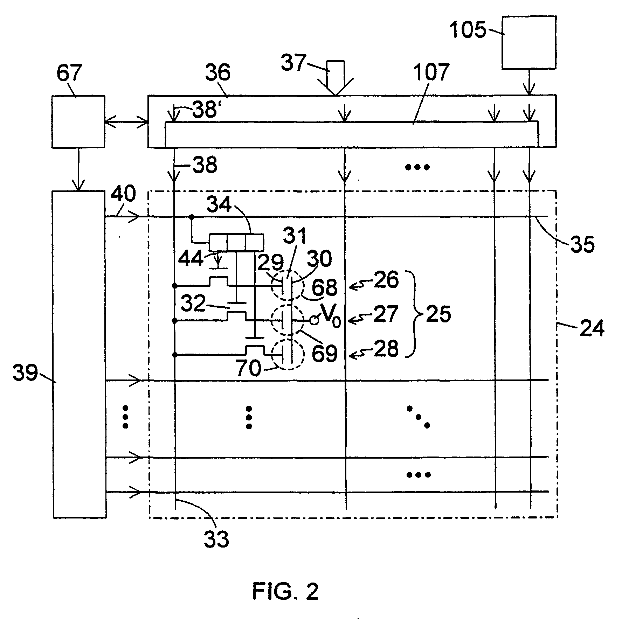

Figur 2 zeigt ein Ausführungsbeispiel der erfindungsgemäßen Aktivmatrix-Flüssigkristallanzeige in Form eines Blockschaltbildes. In den Zeilen und Spalten einer Matrix 24 sind Bildpunkte 25 angeordnet, die jeweils aus drei Unterbildpunkten 26, 27 und 28 bestehen. Jeder Unterbildpunkt, z. B. 26, wird von einer Unterbildpunkt-Elektrode 29, einer allen Bildpunkten 25 der Matrix 24 gemeinsamen Bezugselektrode 30 und einer dazwischen liegenden Flüssigkristall-Unterzelle 31 gebildet. Die Bezugselektrode 30 liegt an einem Bezugspotential V₀. Die Unterbildpunkt-Elektroden 29 sind über ihnen einzeln zugeordnete steuerbare Schalter 32 gemeinsam mit einer dem zugehörigen Bildpunkt 25 und allen anderen Bildpunkten in derselben Spalte zugeordneten Spaltenelektrode 33 verbunden. Die zu jeweils einem Bildpunkt 25 gehörenden steuerbaren Schalter 32 sind steuerseitig an einer Bildpunkt-Steuereinrichtung 34 angeschlossen, die ihrerseits an einer dem zugehörigen Bildpunkt 25 und allen anderen Bildpunkten in derselben Zeile zugeordneten Zeilenelektrode 35 angeschlossen ist.

Die Spaltenelektroden 33 sind an einer Spalten-Steuereinrichtung 36 angeschlossen, die aufgrund von ihr zugeführten Bildsignalen 37 gleichzeitig unterschiedliche Grauwertsignale 38 für die in jeweils einer Zeile liegenden Bildpunkte 25 und zeitlich nacheinander unterschiedliche Grauwertsignale 38 für die Bildpunkte 25 in den verschiedenen Zeilen erzeugt und an die Spaltenelektroden 33 anlegt. Eine Zeilen-Steuereinrichtung 39, an der die Zeilenelektroden 35 angeschlossen sind, erzeugt nacheinander für jede Zeile jeweils ein Steuersignal 40, mit dem die Grauwertsignale 38 zur Ansteuerung der Bildpunkte 25 in der betreffenden Zeile durchgeschaltet werden. Dabei sorgt eine den beiden Steuereinrichtungen 36 und 39 zugeordnete Synchronisiereinrichtung 67 für eine Synchronisierung zwischen den zeitlich aufeinanderfolgenden Grauwertsignalen 38 für die unterschiedlichen Zeilen und den Steuersignalen 40 für die einzelnen Zeilen.

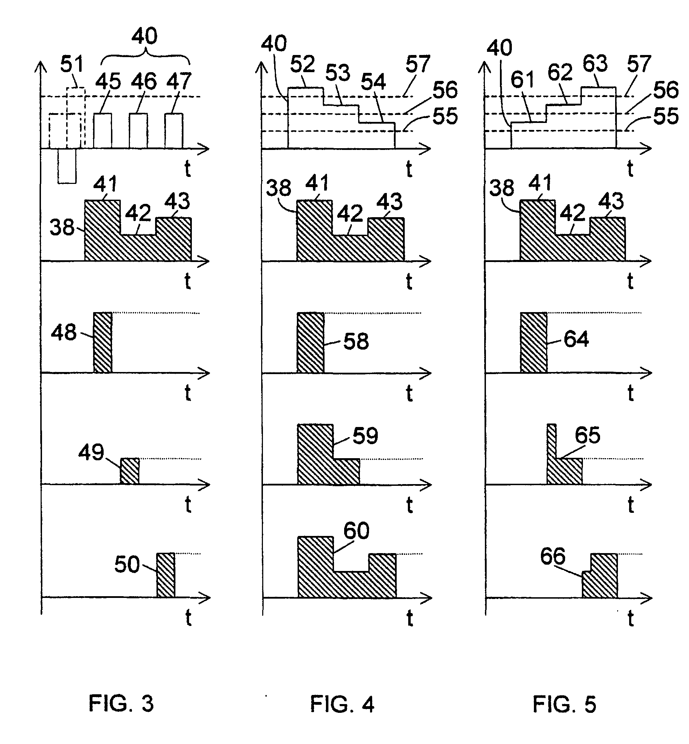

Um bei jeder Ansteuerung eines Bildpunkts 25 die ihn bildenden Unterbildpunkte 26, 27 und 28 unabhängig voneinander ansteuern zu können, bestehen die Grauwertsignale 38, wie die Figuren 3, 4 und 5 zeigen, jeweils aus zeitlich aufeinanderfolgenden unterschiedlichen Grauwertpegeln 41, 42 und 43 für die unterschiedlichen Unterbildpunkte 26, 27 und 28. Das Steuersignal 40 weist eine derartige Form auf, daß es in der Bildpunkt-Steuereinrichtung 34 in voneinander getrennte Einschaltsignale 44 für die steuerbaren Schalter 32 umgesetzt wird, so daß die unterschiedlichen Grauwertpegel 41, 42 und 43 an die unterschiedlichen Unterbildpunkt-Elektroden 29 und somit an die unterschiedlichen Flüssigkristall-Unterzellen 31 durchgeschaltet werden.

Bei dem in Figur 3 gezeigten Beispiel besteht das Steuersignal 40 aus drei aufeinanderfolgenden Signalimpulsen 45, 46 und 47, die von der als Schieberegister, Zähler oder Serien-Parallel-Wandler ausgebildeten Bildpunkt-Steuereinrichtung 34 örtlich und zeitlich nacheinander den steuerbaren Schaltern 32 als Einschaltsignale 44 zugeführt werden. Von der Spaltenelektrode 33 gelangen somit über die steuerbaren Schalter 32 unterschiedliche Signale 48, 49 und 50 mit den Grauwertpegeln 41, 42 und 43 an die verschiedenen Unterbildpunkt-Elektroden 29, so daß die zugehörigen Flüssigkristall-Unterzellen 31 auf unterschiedliche Spannungen aufgeladen werden und diese bis zur nächsten Ansteuerung beibehalten. Entsprechend den unterschiedlichen Spannungen stellen sich bei den Flüssigkristall-Unterzellen 31 unterschiedliche optische Transparenzen bzw. Helligkeiten ein. Um zu verhindern, daß beispielsweise durch Störimpulse auf der Zeilenelektrode 35 die Reihenfolge der für die Unterbildpunkt-Elektroden 29 erzeugten Einschaltsignale 44 verändert wird, enthält jedes Steuersignal 40 zusätzlich einen Synchronisierimpuls 51, der sich von den übrigen Signalimpulsen 45, 46 und 47 durch Form, Höhe, Dauer oder Polarität unterscheidet und mit dem die Signalumsetzung in der Bildpunkt-Steuereinrichtung 34 bei jeder neuen Ansteuerung der Unterbildpunkte 26, 27 und 28 synchronisiert wird.

Bei dem in Figur 4 gezeigten Beispiel, das nicht beansprucht wird, besteht das Steuersignal 40 aus drei aufeinanderfolgenden Teilsignalen mit stufenweise geringer werdenden Signalpegeln 52, 53 und 54. In der Bildpunkt-Steuereinrichtung 34 wird das Steuersignal 40 mit drei unterschiedlichen Schwellenwerten 55, 56 und 57 verglichen, die den einzelnen steuerbaren Schaltern 32 zugeordnet sind und bei deren Überschreiten der jeweils zugeordnete steuerbare Schalter 32 eingeschaltet wird. Das Teilsignal mit dem Signalpegel 52 überschreitet alle Schwellenwerte 55, 56 und 57, so daß zunächst alle steuerbaren Schalter 32 eingeschaltet werden. Das nächstfolgende Teilsignal mit dem Signalpegel 53 überschreitet nur noch die Schwellenwerte 55 und 56, so daß der steuerbare Schalter 32, dem der Schwellenwert 52 zugeordnet ist, ausgeschaltet wird. Bei dem letzten Teilsignal mit dem Signalpegel 54 wird nur noch der Schwellenwert 55 überschritten, so daß nur noch der jeweils zugeordnete steuerbare Schalter 32 eingeschaltet ist. Von der Spaltenelektrode 33 gelangen somit über die steuerbaren Schalter 32 unterschiedliche Signalteile 58, 59 und 60 des Grauwertsignals 38 an die verschiedenen Unterbildpunkt-Elektroden 29, wobei die unterschiedlichen Grauwertpegel 41, 42 und 43 am Ende der jeweiligen Einschaltzeit der steuerbaren Schalter 32 für die Spannung maßgeblich sind, mit der die zugehörigen Flüssigkristall-Unterzellen 31 aufgeladen werden.

Bei dem in Figur 5 gezeigten Beispiel, das nicht beansprucht wird, besteht das Steuersignal 40 ebenfalls aus drei aufeinanderfolgenden Teilsignalen mit unterschiedlichen Signalpegeln 61, 62 und 63. Im Unterschied zu dem zuvor beschriebenen Beispiel wird das Steuersignal 40 in der Bildpunkt-Steuereinrichtung 34 nicht nur auf Überschreiten der Schwellenwerte 55, 56 und 57 untersucht, sondern auch daraufhin, ob einzelne Schwellenwerte 56 und 57 unterschritten werden, so daß die Bildpunkt-Steuereinrichtung 34 als Fensterkomparator arbeitet. Bei dem gezeigten Beispiel werden die drei steuerbaren Schalter 32 einzeln in Abhängigkeit davon eingeschaltet, ob das Teilsignal mit dem Signalpegel 61 den untersten Schwellenwert 55 überschreitet und den mittleren Schwellenwert 56 unterschreitet, ob das Teilsignal mit dem Signalpegel 62 den mittleren Schwellenwert 56 überschreitet und den oberen Schwellenwert 57 unterschreitet oder ob das Teilsignal mit dem Signalpegel 63 den oberen Schwellenwert 57 überschreitet. Von der Spaltenelektrode 33 gelangen somit über die steuerbaren Schalter 32 unterschiedliche Signalteile 64, 65 und 66 des Grauwertsignals 38 mit den unterschiedlichen Grauwertpegeln 41, 42 und 43 an die verschiedenen Unterbildpunkt-Elektroden 29.

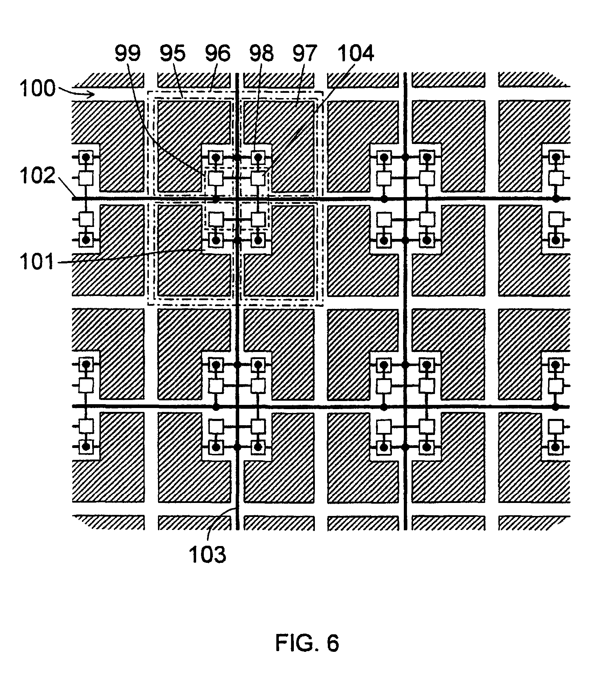

Figur 6 zeigt, wie beispielsweise bei einer Aktivmatrix-Flüssigkristallanzeige mit aus jeweils vier Unterbildpunkten 95 bestehenden Bildpunkten 96 die Unterbildpunkt-Elektroden 97 mit den ihnen zugeordneten steuerbaren Schaltern (Dünnfilmtransistoren) 98 und den Bildpunkt-Steuereinrichtungen 99 auf einem gemeinsamen Träger 100 angeordnet werden können. Die L-förmig ausgebildeten Unterbildpunkt-Elektroden 97 liegen derart einander gegenüber, daß ihre Aussparungen 101 einen freien Bereich bilden, in dem sich die zu dem jeweiligen Bildpunkt 96 gehörende Zeilenelektrode 102 und die Spaltenelektrode 103 kreuzen. In den einzelnen Aussparungen 101 sind die steuerbaren Schalter 98 angeordnet, über die die Unterbildpunkt-Elektroden 97 mit der Spaltenelektrode 103 verbunden sind. Ferner sind in den einzelnen Aussparungen 101 diejenigen Schaltungsteile 104 der Bildpunkt-Steuereinrichtung 99 angeordnet, mit denen die zugeordneten steuerbaren Schalter 98 angesteuert werden. Bei dem gezeigten Ausführungsbeispiel besteht die Bildpunkt-Steuereinrichtung 99 aus einem Schieberegister, das eingangsseitig an der Zeilenelektrode 102 angeschlossen ist und dessen hintereinanderliegende Registerstellen den einzelnen Schaltungsteilen 104 der Bildpunkt-Steuereinrichtung 99 entsprechen.

Bei gleicher Anzahl von Zeilen- und Spaltenelektoden lassen sich also aufgrund der unabhängig voneinander ansteuerbaren Unterbildpunkte im Vergleich zu herkömmlichen Aktivmatrix-Flüssigkristallanzeigen wesentlich mehr Bildinformationen darstellen. So können bei dem Ausführungsbeispiel nach Figur 2 für die Farbbildwiedergabe der einzelnen Bildpunkte 25 den zugehörigen Unterbildpunkten 26, 27 und 28 jeweils ein rotes, grünes und ein blaues Farbfilter 68, 69 und 70 im Strahlengang des Lichts 22 vor- oder nachgeordnet werden.

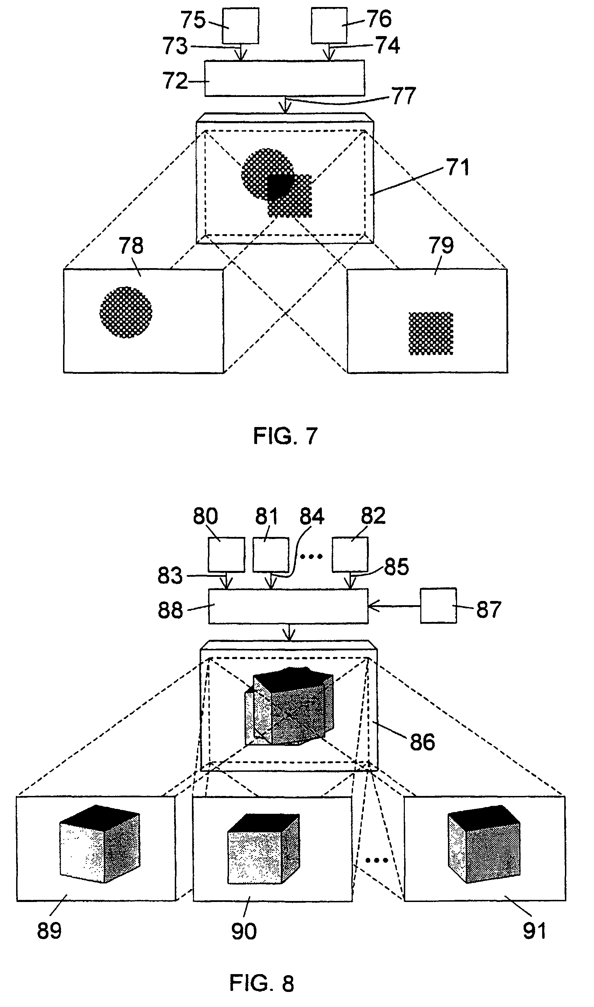

Figur 7 zeigt ein weiteres Ausführungsbeispiel der erfindungsgemäßen Aktivmatrix-Flüssigkristallanzeige 71, bei der die einzelnen Bildpunkte jeweils aus zwei Unterbildpunkten bestehen, denen unterschiedliche Domänen der Flüssigkristallschicht mit unterschiedlicher Ausrichtung der Flüssigkristalle zugeordnet sind. Ein Beispiel hierfür wurde oben anhand von Figur 1 beschrieben. Der Aktivmatrix-Flüssigkristallanzeige 71 werden über eine Signalaufbereitungseinrichtung 72, die Bestandteil der Spalten-Steuereinrichtung 36 ist, Bildsignale 73 und 74 von zwei unterschiedlichen Bildsignalquellen 75 und 76 zugeführt. Die Signalaufbereitungseinrichtung 72 führt die beiden unterschiedlichen Bildsignale 73 und 74 zu einem einzigen Bildsignal 77 zusammen, das aus dem Grauwertpegel des Bildsignals 73, gefolgt von dem Grauwertpegel des Bildsignals 74, besteht. Im einfachsten Fall geschieht dies dadurch, daß mit einer gegenüber der Folge der Bildsignale 73 und 74 doppelten Frequenz zwischen den Bildsignalen 73 und 74 umgeschaltet wird. Von den beiden Unterbildpunkten jedes einzelnen Bildpunktes der Aktivmatrix-Flüssigkristallanzeige 71 wird einer mit dem Grauwertpegel des Bildsignals 73 und der andere mit dem Grauwertpegel des Bildsignals 74 angesteuert, so wie dies anhand der Figuren 2 bis 5 beschrieben wurde. Auf diese Weise werden von der Aktivmatrix-Flüssigkristallanzeige 71 zwei unterschiedliche, unterbildpunktweise verschachtelte Bilder 78 und 79 erzeugt, die aufgrund der ebenfalls unterbildpunktweisen Unterteilung der Flüssigkristallschicht in unterschiedliche Domänen mit unterschiedlicher Ausrichtung der Flüssigkristalle in unterschiedlichen Blickwinkelbereichen sichtbar sind.

Figur 8 zeigt ein Ausführungsbeispiel, bei dem mehrere Bildsignalquellen 80, 81 und 82 Bildsignale 83, 84 und 85 von unterschiedlichen Ansichten eines dreidimensionalen Objekts liefern. Bei der hier verwendeten Aktivmatrix-Flüssigkristallanzeige 86 weisen die Bildpunkte und die Flüssigkristallschicht eine der Anzahl der Bildsignalquellen 80, 81 und 82 entsprechende Zahl von Unterbildpunkten bzw. diesen zugeordneten Domänen mit unterschiedlicher Ausrichtung der Flüssigkristalle auf. Die Bildsignale 83, 84 und 85 werden der Aktivmatrix-Flüssigkristallanzeige 86 über eine von einer Einstellvorrichtung 87 gesteuerte Umschalteinrichtung 88 zugeführt. Mittels der Einstellvorrichtung 87 lassen sich die unterschiedlichen Schaltstellungen der Umschalteinrichtung 88 einstellen, so daß von der Aktivmatrix-Flüssigkristallanzeige 86 unterschiedliche Bilder 89, 90 und 91, die das dreidimensionale Objekt in unterschiedlichen Ansichten darstellen, für unterschiedliche Blickwinkelbereiche erzeugt werden und auf diese Weise eine dreidimensionale Darstellung des Objekts erfolgt. Natürlich lassen sich die unterschiedlichen Bilder 89, 90 und 91 auch gleichzeitig darstellen, so wie dies anhand von Figur 7 beschrieben wurde.

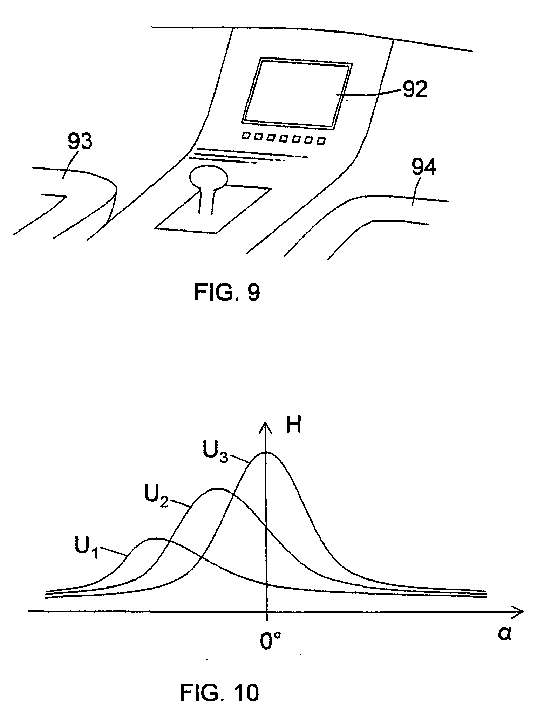

Anstelle der Darstellung mehrerer unterschiedlicher Bilder für unterschiedliche Blickwinkelbereiche ist es auf gleiche Weise möglich, ein und dasselbe Bild wahlweise entweder in einem von beispielsweise zwei unterschiedlichen Blickwinkelbereichen, dem anderen Blickwinkelbereich oder für beide Blickwinkelbereiche darzustellen. Damit kann beim Einbau der Aktivmatrix-Flüssigkristallanzeige in einem Fahrzeug das dargestellte Bild während der Fahrt für den Blickwinkelbereich des Fahrers unsichtbar, für den des Beifahrers dagegen sichtbar gemacht werden. Figur 9 zeigt ein Beispiel für den Einbau der Aktivmatrix-Flüssigkristallanzeige 92 in einem Fahrzeug etwa mittig vor dem Sitz 93 des Fahrers und dem Sitz 94 des Beifahrers.

Bei den zuvor beschriebenen Ausführungsbeispielen der erfindungsgemäßen Aktivmatrix-Flüssigkristallanzeige erfolgt die Einstellung unterschiedlicher Blickwinkelbereiche, innerhalb derer das dargestellte Bild bzw. die dargestellten Bilder für den Betrachter sichtbar sind, dadurch, daß die Unterbildpunkte mit den in den ihnen zugeordneten Domänen unterschiedlich ausgerichteten Flüssigkristallen unabhängig voneinander angesteuert werden. Ergänzend oder alternativ hierzu kann der Blickwinkelbereich durch Änderung der Potentialdifferenz zwischen dem Bezugspotential an der Bezugselektrode und dem Potentialniveau der an die Unterbildpunkt-Elektroden durchgeschalteten Grauwertpegel eingestellt werden.

Wie nämlich Figur 10 zeigt, ist die Helligkeit H des aus einer Aktivmatrix-Flüssigkristallanzeige austretenden Lichts und damit der Kontrast des jeweils dargestellten Bildes von dem Blickwinkel α abhängig. Diese Abhängigkeit variiert darüber hinaus auch mit der Spannung U, hier z. B. drei unterschiedliche Spannungen U₁, U₂ und U₃, an den Flüssigkristallzellen der herkömmlichen Aktivmatrix-Flüssigkristallanzeigen bzw. an den Flüssigkristall-Unterzellen der erfindungsgemäßen Aktivmatrix-Flüssigkristallanzeige.

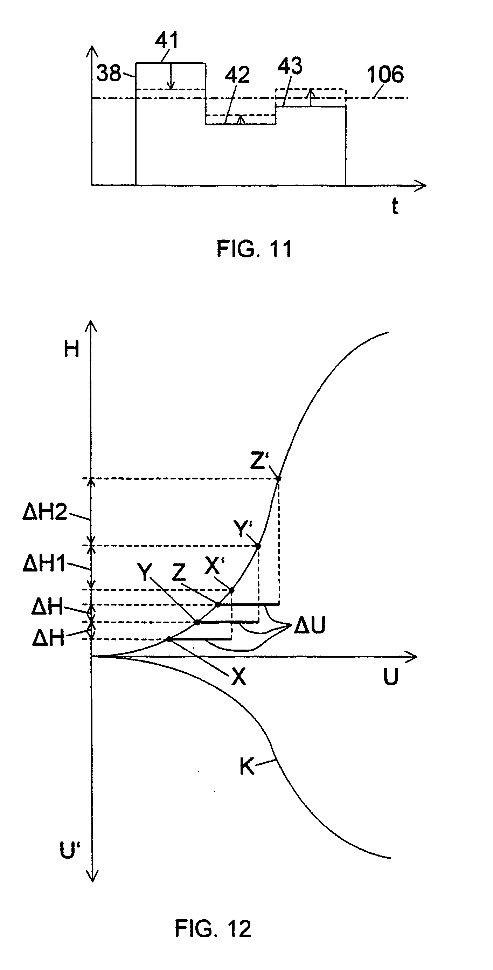

Bei der in Figur 2 gezeigten Aktivmatrix-Flüssigkristallanzeige ist daher eine Einstellvorrichtung 105 vorgesehen, mit der sich, wie beispielhaft in Figur 11 dargestellt, die zeitlich aufeinanderfolgenden und zur Ansteuerung der einzelnen Unterbildpunkte 26, 27 und 28 dienenden Grauwertpegel 41, 42 und 43 des Grauwertsignals 38 unter zumindest annähernder Beibehaltung des durchschnittlichen Grauwertpegels 106 verändern lassen. Auf diese Weise werden die blickwinkelabhängigen Helligkeiten der einzelnen Unterbildpunkte 26, 27 und 28 bei insgesamt unveränderter Gesamthelligkeit des jeweils von ihnen gebildeten Bildpunktes 25 geändert.

Wie Figur 12 zeigt, ist jedoch das Abhängigkeitsverhältnis zwischen der Helligkeit H oder gleichbedeutend der optischen Transparenz der Flüssigkristallzellen bzw. Flüssigkristall-Unterzellen 31 und der an ihnen jeweils anliegenden Spannung U typischerweise nichtlinear. Üblicherweise werden daher Flüssigkristallzellen in einem Spannungsbereich betrieben, in dem diese Abhängigkeit weitgehend linear ist. In den nichtlinearen Bereichen kann es, wie im folgenden erläutert wird, zu Verfälschungen der Bildwiedergabe kommen. Es werden beispielhaft drei Bildpunkte X, Y und Z betrachtet, die gleichzeitig von drei unterschiedlichen Flüssigkristallzellen erzeugt werden, wobei der Bildpunkt Z um einen Betrag ΔH heller als der Bildpunkt Y und dieser wiederum um denselben Betrag ΔH heller als der Bildpunkt X ist. Werden nun die Spannungen an den drei Flüssigkristallzellen alle um denselben Betrag ΔU verändert, so verändert sich der Helligkeitsabstand zwischen den Bildpunkten X, Y und Z in nichtlinearer Weise, wobei sich zwischen den neuen Bildpunkten X' und Y' ein Helligkeitsabstand ΔH1 und zwischen den neuen Bildpunkten Y' und Z' ein davon unterschiedlicher Helligkeitsabstand ΔH2 ergibt. Diese Helligkeitsverfälschung macht sich insbesondere bei der Farbbildwiedergabe in Form von Farbverfälschungen und damit noch störender als bei der reinen Grauwert-Bildwiedergabe bemerkbar.

Wie Figur 2 zeigt, enthält daher die Spalten-Steuereinrichtung 36 eine Korrektureinrichtung 107, in der die Grauwertsignale 38', bevor sie an die Spaltenelektroden 33 angelegt werden, aufgrund von Informationen über die in Figur 12 gezeigte typische Abhängigkeit zwischen der optischen Transparenz der Flüssigkristallzellen 31 und der an ihnen anliegenden Spannung U sowie in Abhängigkeit von der Potentialdifferenz zwischen den Grauwertsignalen 38' und dem Bezugspotential V₀ in der Weise verzerrt werden, daß sich ein zumindest annähernd linearer Zusammenhang zwischen der optischen Transparenz der Flüssigkristallzellen 31 und den unverzerrten Grauwertsignalen 38' ergibt.

Figur 12 zeigt als Beispiel eine Kennlinie K, entsprechend der in der Korrektureinrichtung 107 die unverzerrten Grauwertsignale 38' mit der Spannung U' in die verzerrten Grauwertsignale 38 mit der Spannung U umgesetzt werden können. Die Umsetzung kann auch digital erfolgen, wobei dann die Kennlinie K in Form einer Wertetabelle in einem hier nicht gezeigten Speicher vorliegt.

## Patentansprüche

1. Aktivmatrix-Flüssigkristallanzeige,
mit in Zeilen und Spalten einer Matrix (24) angeordneten und jeweils aus mindestens zwei Unterbildpunkten (26, 27, 28) bestehenden Bildpunkten (25), die jeweils von mindestens zwei benachbarten Unterbildpunkt-Elektroden (29), einer den Bildpunkten (25) gemeinsamen Bezugselektrode (30) und einer zwischen den Unterbildpunkt-Elektroden (29) und der Bezugselektrode (30) liegenden Flüssigkristallschicht (7) gebildet werden,
mit Zeilenelektroden (35) und Spaltenelektroden (33), wobei jeder Zeile von Bildpunkten (25) jeweils eine der Zeilenelektroden (35) und jeder Spalte von Bildpunkten (25) jeweils eine der Spaltenelektroden (33) zugeordnet ist,
mit einer an den Zeilenelektroden (35) angeschlossenen und nacheinander Steuersignale (40) für die unterschiedlichen Zeilen erzeugenden Zeilen-Steuereinrichtung (39),
mit einer an den Spaltenelektroden (33) angeschlossenen und Grauwertsignale (38) mit zeitlich aufeinanderfolgenden unterschiedlichen Grauwertpegeln (41, 42, 43) für die unterschiedlichen Unterbildpunkte (26, 27, 28) erzeugenden Spalten-Steuereinrichtung (36) und
mit den Unterbildpunkten (26, 27, 28) einzeln zugeordneten steuerbaren Schaltern (32), über die die Unterbildpunkt-Elektroden (29) jedes einzelnen Bildpunkts (25) mit der diesem zugeordneten Spaltenelektrode (33) verbunden sind und die steuerseitig über eine den Unterbildpunkten (26, 27, 28) jedes einzelnen Bildpunktes (25) jeweils gemeinsame Bildpunkt-Steuereinrichtung (34) an der jeweils zugeordneten Zeilenelektrode (35) angeschlossen sind, wobei jede Bildpunkt-Steuereinrichtung (34) aus dem ihr über die Zeilenelektrode (35) zugeführten Steuersignal (40) örtlich und zeitlich verschiedene Einschaltsignale (44) für die den unterschiedlichen Unterbildpunkten (26, 27, 28) zugeordneten steuerbaren Schalter (32) erzeugt,
**dadurch gekennzeichnet,**
**daß** das Steuersignal (40) der Zeilensteuereinrichtung (39) für jede Zeile jeweils aus voneinander getrennten, zeitlich aufeinanderfolgenden Signalimpulsen (45, 46, 47) besteht und daß jede Bildpunkt-Steuereinrichtung (34) Mittel zur Umsetzung dieser zeitlich aufeinanderfolgenden Signalimpulse (45, 46, 47) in die örtlich und zeitlich verschiedenen Einschaltsignale (44) aufweist.

2. Aktivmatrix-Flüssigkristallanzeige nach Anspruch 1, **dadurch gekennzeichnet, daß** die Mittel zur Umsetzung ein Schieberegister, einen Zähler oder einen Serien-Parallel-Wandler umfassen.

3. Aktivmatrix-Flüssigkristallanzeige nach Anspruch 1 oder 2, **dadurch gekennzeichnet, daß** jedes Steuersignal (40) zusätzlich einen von den Signalimpulsen (45, 46, 47) verschiedenen Synchronisierimpuis (51) enthält und daß jede Bildpunkt-Steuereinrichtung (34) Mittel zur Erkennung des Synchronisierimpulses (51) und zur Synchronisierung der Signalumsetzung aufweist.

4. Aktivmatrix-Flüssigkristallanzeige nach einem der vorangehenden Ansprüche, **dadurch gekennzeichnet, daß** den einzelnen Unterbildpunkten (26, 27, 28) jedes Bildpunkts (25) unterschiedliche Farbfilter (68, 69, 70) zugeordnet sind.

5. Aktivmatrix-Flüssigkristallanzeige nach einem der vorangehenden Ansprüche, **gekennzeichnet durch** eine Einstellvorrichtung (105) zur veränderbaren Einstellung der zeitlich aufeinanderfolgenden Grauwertpegel (41, 42, 43) für die einzelnen Unterbildpunkte (26, 27, 28) jedes Bildpunktes (25) unter zumindest annähernder Beibehaltung des durchschnittlichen Grauwertpegels (106) aller dieser Unterbildpunkte (26, 27, 28).

6. Aktivmatrix-Flüssigkristallanzeige nach einem der vorangehenden Ansprüche, **dadurch gekennzeichnet, daß** die Spalten-Steuereinrichtung (36) Mittel (72) zur sequentiellen Anordnung der von mindestens zwei unterschiedlichen Bildsignalquellen (75, 76) gelieferten Grauwertpegel in den von ihr für die Ansteuerung der einzelnen Bildpunkte erzeugten Grauwertsignalen aufweist.

7. Aktivmatrix-Flüssigkristallanzeige nach einem der vorangehenden Ansprüche, **dadurch gekennzeichnet, daß** die Flüssigkristallschicht (7) im Bereich jedes einzelnen Bildpunktes (1) jeweils in den einzelnen Unterbildpunkten (2, 3) zugeordnete Domänen (8, 9) mit unterschiedlicher Ausrichtung der Flüssigkristalle unterteilt ist.

8. Aktivmatrix-Flüssigkristallanzeige nach einem der vorangehenden Ansprüche, **dadurch gekennzeichnet, daß** die Bildpunkt-Steuereinrichtungen (99) zusammen mit den Unterbildpunkt-Elektroden (97), den steuerbaren Schaltern (98), den Zeilenelektroden (102) und den Spaltenelektroden (103) auf einem gemeinsamen Träger (100) angeordnet sind.

9. Verwendung der Aktivmatrix-Flüssigkristallanzeige nach einem der vorangehenden Ansprüche, **dadurch gekennzeichnet, daß** sie in einem Fahrzeug etwa mittig vor seitlich benachbarten Passagiersitzen (93, 94) angeordnet ist.

## Claims

1. Active-matrix liquid-crystal display,
comprising pixels (25) that are disposed in rows and columns of a matrix (24) and each comprise at least two subpixels (26, 27, 28) and that are each formed by at least two adjacent subpixel electrodes (29), a reference electrode (30) common to all the pixels (25) and a liquid-crystal layer (7) situated between the subpixel electrodes (29) and the reference electrode (30),
comprising row electrodes (35) and column electrodes (33), wherein one of the row electrodes (35) is assigned in each case to every row of pixels (25) and one of the column electrodes (33) is assigned in each case to every column of pixels (25),
comprising a row control device (39) that is connected to the row electrodes (35) and consecutively generates control signals (40) for the different rows,
comprising a column control device (36) that is connected to the column electrodes (33) and that generates grey-value signals (38) having temporally consecutive, different grey-value levels (41, 42, 43) for the different subpixels (26, 27, 28), and
comprising controllable switches (32) that are individually assigned to the subpixels (26, 27, 28) and via which the subpixel electrodes (29) of every individual pixel (25) are connected to the column electrode (33) assigned to it and that are connected on the control side via a pixel control device (34), common in each case to the subpixels (26, 27, 28) of every individual pixel (25) to the respectively assigned row electrode (35), wherein every pixel control device (34) generates from the control signal (40) fed to it via the row electrode (35) spatially and temporally different switch-on signals (44) for the controllable switches (32) assigned to the different subpixels (26, 27, 28),
**characterized**
**in that** the control signal (40) of the row control device (39) for every row comprises in each case temporally consecutive signal pulses (45, 46, 47) separated from one another and in that every pixel control device (34) has means for converting said temporally consecutive signal pulses (45, 46, 47) into the spatially and temporally different switch-on signals (44).

2. Active-matrix liquid-crystal display according to Claim 1, **characterized in that** the means for the conversion comprise a shift register, a counter or a series/parallel converter.

3. Active-matrix liquid-crystal display according to Claim 1 or 2, **characterized in that** every control signal (40) contains, in addition, a synchronizing pulse (51) that is different from the signal pulses (45, 46, 47) and **in that** every pixel control device (34) has means for detecting the synchronizing pulse (51) and for synchronizing the signal conversion.

4. Active-matrix liquid-crystal display according to one of the preceding claims, **characterized in that** different colour filters (68, 69, 70) are assigned to the individual subpixels (26, 27, 28) of every pixel (25).

5. Active-matrix liquid-crystal display according to one of the preceding claims, **characterized by** an adjustment device (105) for the alterable setting of the temporally consecutive grey-value levels (41, 42, 43) for the individual subpixels (26, 27, 28) of every pixel (25) while at least approximately maintaining the average grey-value level (106) of all said subpixels (26, 27, 28).

6. Active-matrix liquid-crystal display according to one of the preceding claims, **characterized in that** the column control device (36) has means (72) for the sequential arrangement of the grey-value level supplied by at least two different picture-signal sources (75, 76) in the grey-value signals generated by it for the activation of the individual pixels.

7. Active-matrix liquid-crystal display according to one of the preceding claims, **characterized in that** the liquid-crystal layer (7) is subdivided in each case in the vicinity of every individual pixel (1) into domains (8, 9), assigned to the individual subpixels (2, 3), having different alignment of the liquid crystals.

8. Active-matrix liquid-crystal display according to one of the preceding claims, **characterized in that** the pixel control devices (99) are disposed on a common carrier (100) together with the subpixel electrodes (97), the controllable switches (98), the row electrodes (102) and the column electrodes (103).

9. Use of the active-matrix liquid-crystal display according to one of the preceding claims, **characterized in that** it is disposed in a vehicle approximately centrally in front of laterally adjacent passenger seats (93, 94).

## Revendications

1. Afficheur à cristaux liquides à matrice active,
comprenant, disposés en lignes et cellules d'une matrice (24) et constitués respectivement d'au moins deux sous-pixels (26, 27, 28), des pixels (25) qui sont formés respectivement d'au moins deux électrodes (29) voisines de sous-pixels, d'une électrode (30) de référence commune aux pixels (25) et d'une couche (7) de cristaux liquides se trouvant entre les électrodes (29) de sous-pixels et l'électrode (30) de référence,
comprenant des électrodes (35) de lignes et des électrodes (33) de colonnes, respectivement l'une des électrodes (35) de lignes étant associée à chaque ligne de pixels (25) et respectivement l'une des électrodes (33) de colonnes étant associée à chaque colonne de pixels (25),
comprenant un dispositif (39) de commande de lignes relié aux électrodes (35) de lignes et produisant des signaux (40) successifs de commande pour les lignes différentes,
comprenant un dispositif (36) de commande de colonnes relié aux électrodes (33) de colonnes et produisant des signaux (38) de valeur de gris ayant des niveaux (41, 42, 43) de valeur de gris différents et qui se succèdent dans le temps pour les sous-pixels (26, 27, 28) différents et
comprenant des commutateurs (32), qui peuvent être commandés, qui sont associés individuellement aux sous-pixels (26, 27, 28) par lesquels les électrodes (29) de sous-pixels de chaque pixel (25) individuel sont reliées à l'électrode (33) de colonne qui lui est associée et qui, du côté de la commande, sont reliées à l'électrode (35) de ligne respectivement associée par respectivement un dispositif (34) de commande de pixels commun aux sous-pixels (26, 27, 28) de chaque pixel (25) individuel, chaque dispositif (34) de commande de pixels produisant, à partir du signal (40) de commande qui lui est envoyé par l'électrode (35) de ligne, des signaux (44) différents dans le temps et dans l'espace de passage à l'état conducteur des commutateurs (32) qui peuvent être commandés et qui sont associés aux différents sous-pixels (26, 27, 28),
**caractérisé**
**en ce que** le signal (40) de commande du dispositif (39) de commande de ligne est constitué pour chaque ligne respectivement d'impulsions (45, 46, 47) de signaux séparées les unes des autres et se succédant dans le temps et en ce que chaque dispositif (34) de commande de pixels comprend des moyens de transformation de ces impulsions (45, 46, 47) de signaux se succédant dans le temps en les signaux (44) différents dans le temps et dans l'espace de passage à l'état conducteur.

2. Afficheur à cristaux liquides à matrice active suivant la revendication 1, **caractérisé en ce que** les moyens de transformation comprennent un registre à décalage, un compteur ou un convertisseur série parallèle.

3. Afficheur à cristaux liquides à matrice active suivant la revendication 1 ou 5, **caractérisé en ce que** chaque signal (40) de commande comprend, en outre, une impulsion (51) de synchronisation différente des impulsions (45, 46, 47) de signal et **en ce que** chaque dispositif (34) de commande de pixels comprend des moyens destinés à reconnaître l'impulsion (51) de synchronisation et destinés à synchroniser la conversion du signal.

4. Afficheur à cristaux liquides à matrice active suivant l'une des revendications précédentes, **caractérisé en ce qu'**il est associé aux sous-pixels (26, 27, 28) individuels de chaque pixel (25) des filtres (68, 69, 70) colorés différents.

5. Afficheur à cristaux liquides à matrice active suivant l'une des revendications précédentes, **caractérisé par** un dispositif (105) de réglage destiné à régler de manière modifiable les niveaux (41, 42, 43) de valeur de gris qui se succèdent dans le temps des sous-pixels (26, 27, 28) individuels de chaque pixel (25) en conservant au moins approximativement le niveau (106) moyen de valeur de gris de tous ces sous-pixels (26, 27, 28).

6. Afficheur à cristaux liquides à matrice active suivant l'une des revendications précédentes, **caractérisé en ce que** le dispositif (36) de commande de colonnes comporte des moyens (72) destinés à ordonner de manière séquentielle les niveaux de valeur de gris fournis par au moins deux sources (75, 76) différentes de signal d'image en les signaux de valeur de gris qu'il produit pour la commande des pixels individuels.

7. Afficheur à cristaux liquides à matrice active suivant l'une des revendications précédentes, **caractérisé en ce que** la couche (7) de cristaux liquides est subdivisée dans la zone de chaque pixel (1) individuel respectivement en des domaines (8, 9) associés aux sous-pixels (2, 3) individuels et ayant des orientations différentes des cristaux liquides.

8. Afficheur à cristaux liquides à matrice active suivant l'une des revendications précédentes, **caractérisé en ce que** les dispositifs (99) de commande de pixels sont disposés ensemble avec les électrodes (97) de sous-pixels, les commutateurs (98) qui peuvent être commandés, les électrodes (102) de lignes et les électrodes (103) de colonnes sur un support (100) commun.

9. Utilisation de l'afficheur à cristaux liquides à matrice active suivant l'une des revendications précédentes, **caractérisée en ce qu'**il est disposé dans un véhicule à peu près au milieu devant des sièges (93, 94) de passager voisins latéralement.
